# EUROPEAN PATENT APPLICATION

(11) **EP 4 509 570 A1**
(43) Date of publication of application: **19.02.2025**
(21) Application number: 23831114.6
(22) Date of filing: 15.06.2023
(51) Int. Cl.: C09D 17/00, C09D 11/037, C09B 67/20

(54) **PIGMENT COMPOSITION, COLORANT, AND LIQUID INK**

(30) Priority: 28.06.2022 JP 2022103406
(71) Applicant: DIC Corporation, Tokyo 174-8520 (JP)
(72) Inventor: YAMADA, Shougo, Kamisu-shi, Ibaraki 314-0193 (JP); YOSHIDA, Takuya, Kamisu-shi, Ibaraki 314-0193 (JP); KIMURA, Akira, Kamisu-shi, Ibaraki 314-0193 (JP)
(74) Representative: TBK
(86) International application number: PCT/JP2023/022186
(87) International publication number: WO 2024/004666

(57) **Abstract**

An object of the present invention is to provide a pigment composition capable of exhibiting good dispersibility and dispersion stability of a pigment in a polyurethane ink or the like, and a colorant and a liquid ink containing the pigment composition. Specifically, the pigment composition of the present invention contains at least one organic pigment selected from the group consisting of benzimidazolone azo pigments and quinacridone pigments, and at least one polycarboxylic acid compound represented by the following Formulae (I) to (III).

**HOOC-R₁-COOH** ... (I)

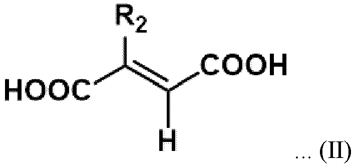

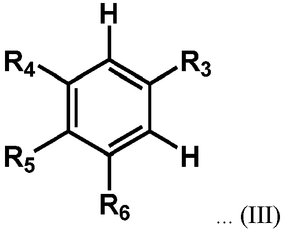

(The descriptions in Formula (I), Formula (II), and Formula (III) are as described herein.)

## Description

### TECHNICAL FIELD

The present invention relates to a pigment composition, and a colorant and a liquid ink containing the same.

### BACKGROUND ART

Pigments have long been used mainly for the coloration of inks, paints, toners, rubbers, and plastics, spun-dyeing of synthetic fibers, pigment printing, and the coloration of sundries. Among them, printing applications such as inks are important. Printing is performed by making a printing plate, applying printing ink to the plate surface, and transferring it to paper, film, cloth, or the like. The printing plate includes a lithographic plate, an intaglio plate, a letterpress plate, and a stencil plate, and printing methods such as offset printing, gravure printing, and flexographic printing are available according to the shape of the plate. Among these, gravure printing and flexographic printing are widely employed in printing on films for food packaging, soft packaging films, and the like, and are industrially important printing methods.

Gravure inks used in gravure printing and flexographic ink used in flexographic printing are composed of colorants such as pigments, binder resins, solvents, additives, and the like. In particular, polyurethane ink using a polyurethane resin as a binder occupies an important position in the field of food packaging. This is derived from the fact that the polyurethane resin has good adhesiveness to many substrates and excellent coating properties, and is excellent in hot water resistance at the time of retort treatment (high retort resistance). On the other hand, since the polyurethane resin has a low ability to disperse a pigment, a pigment composition exhibiting good dispersibility and dispersion stability in a polyurethane ink is required.

With respect to the above-mentioned polyurethane resin binder and the polyurethane ink containing the same, the following PTLs 1 and 2 are known. However, sufficient dispersibility and dispersion stability of the pigment may not be obtained by these methods.

### CITATION LIST

### PATENT LITERATURE

PTL 1: JP 2003-221539 A
PTL 2: JP 2007-238953 A

### SUMMARY OF INVENTION

### TECHNICAL PROBLEM

An object of the present invention is to provide a pigment composition capable of exhibiting good dispersibility and dispersion stability of a pigment in a polyurethane ink or the like, and a colorant and a liquid ink containing the pigment composition.

### SOLUTION TO PROBLEM

The present inventors have conducted studies focusing on an acid compound capable of improving the dispersibility and dispersion stability of a pigment in a pigment composition, and have found that a carboxylic acid compound has an effect. Further studies have found that a monocarboxylic acid compound has a small effect, but a polycarboxylic acid compound having two or more carboxy groups in a molecule has an excellent effect. It is presumed that this is because the polycarboxylic acid compound mediates between an organic pigment and a binder resin such as a polyurethane resin, whereby the resin component is easily adsorbed to the organic pigment, and the dispersion system is stabilized.

Further, studies were made on the polycarboxylic acid compound, and it was found that the distance between the carboxy groups of the polycarboxylic acid compound and the position of the substituent are important for exhibiting the effect. As a result, the present inventors have found at least one polycarboxylic acid compound represented by the following Formulae (I) to (III).

Considerations for each of the polycarboxylic acid compounds are as follows.

In the case of a polycarboxylic acid having carboxy groups at both ends of an alkylene group as in Formula (I), if the alkylene group is too short, the resins sterically crowd each other when adsorbed on the surface of the organic pigment, and a sufficient effect may not be obtained. On the other hand, if the alkylene group is too long, the solubility of the polycarboxylic acid compound in a solvent becomes high, and the amount of adsorption to the surface of the organic pigment becomes small, so that the effect becomes small.

In addition, in the case of polycarboxylic acid compounds, as in Formula (II), in which two carboxy groups are substituted for ethene, the steric configuration of the carboxy group is important. When the compound is a cis-isomer, both of the two carboxy groups are adsorbed to either one of the organic pigment or the resin component, and cannot mediate between the pigment and the resin, and therefore, the effect of improving dispersibility and dispersion stability is small. On the other hand, when a trans-isomer is used, the resin can be adsorbed on the pigment, and the effect of improving dispersibility and dispersion stability is large.

In the case of a polycarboxylic acid compound having a plurality of carboxy groups on an aromatic ring or a plurality of alkyl groups substituted with a carboxy group on an aromatic ring as in Formula (III), the substitution position of the carboxy group is important. When two carboxy groups are substituted at the ortho-position, the compound is adsorbed to either one of the pigment or the resin for the same reason as that of the cis-isomer of the carboxy group-substituted ethene, and a sufficient effect cannot be obtained. A polycarboxylic acid compound having a carboxy group in the meta position or the para position can interact with both the organic pigment and the resin, and dispersibility and dispersion stability are improved.

In addition, organic pigments exhibiting good effects in relation to at least one polycarboxylic acid compound represented by Formulae (I) to (III) were also studied, and it was found that, surprisingly, among the organic pigments, benzimidazolone azo pigments and quinacridone pigments exhibit particularly good dispersibility and dispersion stability as polyurethane inks.

That is, the present invention relates to the following [1] to [3].
[1] A pigment composition containing at least one organic pigment selected from the group consisting of benzimidazolone azo pigments and quinacridone pigments, and at least one polycarboxylic acid compound represented by the following Formulae (I) to (III):

   **HOOC-R₁-COOH** ... (I)

   in which R₁ represents an alkylene group which may be substituted with a hydroxy group or a carboxy group, or a single bond; 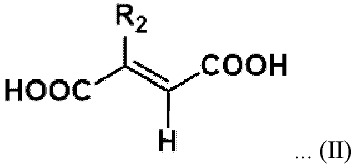 in which R₂ represents an alkyl group which may be substituted with a hydroxy group or a carboxy group; 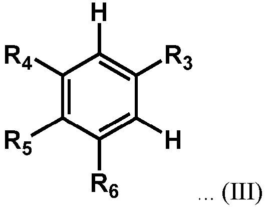 in which R₃ represents a carboxy group or an alkyl group substituted with a carboxy group, and R₄ to R₆ each independently represent a hydrogen atom, a hydroxy group, a carboxy group, or an alkyl group which may be substituted with a hydroxy group or a carboxy group, and one or more of R₄ to R₆ are a carboxy group or an alkyl group substituted with a carboxy group.
[2] A colorant containing the pigment composition according to [1].
[3] A liquid ink containing the colorant according to [2].

### ADVANTAGEOUS EFFECTS OF INVENTION

The pigment composition of the present invention is also excellent in dispersibility and dispersion stability of the pigment in a polyurethane ink or the like. Therefore, the pigment composition of the present invention is suitable for a colorant or a liquid ink (particularly, a polyurethane ink containing polyurethane as a binder resin).

### DESCRIPTION OF EMBODIMENTS

Hereinafter, the present invention will be described in detail.

### [Pigment Composition]

The pigment composition of the present invention contains at least one organic pigment selected from the group consisting of benzimidazolone azo pigments and quinacridone pigments, and at least one polycarboxylic acid compound represented by the following Formulae (I) to (III):

**HOOC-R₁-COOH** ... (I)

in which R₁ represents an alkylene group which may be substituted with a hydroxy group or a carboxy group, or a single bond; 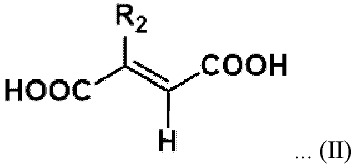 in which R₂ represents an alkyl group which may be substituted with a hydroxy group or a carboxy group; 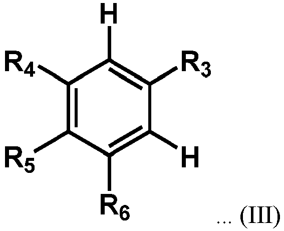 in which R₃ represents a carboxy group or an alkyl group substituted with a carboxy group, and R₄ to R₆ each independently represent a hydrogen atom, a hydroxy group, a carboxy group, or an alkyl group which may be substituted with a hydroxy group or a carboxy group, and one or more of R₄ to R₆ are a carboxy group or an alkyl group substituted with a carboxy group.

In the description herein, at least one polycarboxylic acid compound represented by the above Formulae (I) to (III) may be simply referred to as "polycarboxylic acid compound". The compound represented by Formula (I) does not include the compounds represented by Formulae (II) and (III).

### (Organic Pigment)

The organic pigment in the present invention is at least one selected from the group consisting of benzimidazolone azo pigments and quinacridone pigments. Examples of the benzimidazolone azo pigments include C.I. Pigment Yellow 180 (PY180), C.I. Pigment Yellow 181 (PY181), C.I. Pigment Yellow 185 (PY185), C.I. Pigment Yellow 154 (PY154), C.I. Pigment Yellow 120 (PY120), C.I. Pigment Yellow 151 (PY151), C.I. Pigment Yellow 167 (PY167), C.I. Pigment Yellow 175 (PY175), C.I. Pigment Yellow 194 (PY194), C.I. Pigment Orange 36 (PO36), C.I. Pigment Orange 62 (PO62), C.I. Pigment Orange 60 (PO60), C.I. Pigment Orange 64 (PO64), C.I. Pigment Orange 72 (PO72), C.I. Pigment Red 171 (PR171), C.I. Pigment Red 175 (PR175), C.I. Pigment Red 176 (PR176), C.I. Pigment Red 185 (PR185), C.I. Pigment Red 208 (PR208), C.I. Pigment Violet 32 (PV32), C.I. Pigment Brown 25 (PBr25), and C.I. Pigment Brown 32 (PBr32). Examples of the quinacridone pigments include C.I. Pigment Violet 19 (PV19), C.I. Pigment Red 122 (PR122), C.I. Pigment Red 209 (PR209), C.I. Pigment Red 202 (PR202), C.I. Pigment Red 206 (PR206), C.I. Pigment Orange 48 (PO48), C.I. Pigment Orange 49 (PO49), and C.I. Pigment Violet 42 (PV42). Among these, the benzimidazolone azo pigments are preferably benzimidazolone acetron-based azo pigments, and PY180 is particularly preferable, and the quinacridone pigments are preferably PV19 and PR122. These organic pigments may be used alone or in combination of two or more, and may be a solid solution of a combination of two or more.

A primary particle diameter of the benzimidazolone azo pigments and the quinacridone pigments is, for example, 0.01 to 5.0 µm, and preferably 0.1 to 2.5 µm. A specific surface area of the benzimidazolone azo pigments and quinacridone pigments is, for example, 10 to 150 m²/g, and preferably 20 to 100 m²/g. When the primary particle diameter and the specific surface area are within the above ranges, the coloring power and the dispersibility are excellent.

The organic pigment in the present invention may include an organic pigment (dye) other than the benzimidazolone azo pigment and the quinacridone pigment or a natural pigment. Examples of the organic pigment (dye) include insoluble azo, condensed azo, quinophthalone, isoindolinone, isoindoline, azomethine, anthraquinone, xanthene, diketopyrrolopyrrole, perylene, perinone, indigoid, dioxazine, and phthalocyanine. Examples of the natural pigment include carotenoid pigments such as annatto pigment, gardenia yellow pigment, dunaliella carotene, carrot carotene, palm oil carotene, potato carotene, tomato pigment, shrimp pigment, krill pigment, orange pigment, crab pigment, corn pigment, Phaffia pigment, haematococcus algae pigment, marigold pigment, saffron pigment, and capsicum pigment (paprika pigment); quinone pigments such as madder pigment, cochineal pigment, lithospermum root pigment, and lac pigment; anthocyanin pigments such as red cabbage pigment, red radish pigment, perilla pigment, hibiscus pigment, grape juice pigment, grape pericarp pigment, purple sweet potato pigment, purple corn pigment, purple yam pigment, elderberry pigment, cranberry pigment, cherry pigment, hibiscus pigment, blackberry pigment, plum pigment, blueberry pigment, raspberry pigment, and boysenberry pigment; flavonoid pigments such as cacao pigment, kooroo pigment, kaoliang pigment, red sandalwood pigment, onion pigment, tamarind pigment, persimmon pigment, carob pigment, liquorice pigment, Sappanwood pigment, peanut pigment, pecan nuts pigment, safflower red pigment, and safflower yellow pigment; porphyrin pigments such as chlorophyllin, chlorophyll, chlorella pigment, and spirulina pigment; diketone pigments such as turmeric pigment; betacyanin pigments such as red beet pigment; azaphilone pigments such as red koji pigment (monascus pigment); and red koji yellow pigment, caramel, gardenia blue pigment, and gardenia red pigment. Examples thereof include anthocyanin-based pigments such as red cabbage pigment, perilla pigment, gardenia pigment, grape juice pigment, purple sweet potato pigment, and red radish pigment; flavonoid-based pigments such as safflower pigment; chlorophyll-based pigments such as chlorophyll a; carotenoid-based pigments such as zeaxanthin; and phycocyanin-based pigments such as phycocyanobilin. A content of the organic pigment (dye) other than the benzimidazolone azo pigment and the quinacridone pigment or the natural pigment (the total content thereof in a case where two or more kinds of pigments are contained) is, for example, 50% by mass or less, preferably 30% by mass or less, and more preferably 10% by mass or less with respect to 100% by mass of the total amount of the organic pigment (dye) or the natural pigment. Therefore, the content of the benzimidazolone azo pigment or the quinacridone pigment (the total content thereof in a case where both are contained) is, for example, 50% by mass or more, preferably 70% by mass or more, and more preferably 90% by mass or more with respect to 100% by mass of the total amount of the organic pigment (dye).

### (Polycarboxylic Acid Compound)

The polycarboxylic acid compound is at least one polycarboxylic acid compound represented by the above Formulae (I) to (III). Examples of the alkyl group in the alkyl group which may be substituted with a carboxy group of the at least one polycarboxylic acid compound represented by the above Formulae (I) to (III) include a methyl group, an ethyl group, a propyl group, an isopropyl group, a butyl group, an isobutyl group, a sec-butyl group, a tert-butyl group, a pentyl group, and a hexyl group. Examples of the compound represented by Formula (I) include tartaric acid, succinic acid, citric acid, glutaric acid, adipic acid, oxalic acid, malic acid, aspartic acid, malonic acid, pimelic acid, suberic acid, azelaic acid, and sebacic acid. Examples of the compound represented by Formula (II) include aconitic acid, fumaric acid, and mesaconic acid. Examples of the compound represented by Formula (III) include isophthalic acid, terephthalic acid, trimesic acid, benzenetricarboxylic acid, methylisophthalic acid, hydroxyisophthalic acid, methylterephthalic acid, hydroxyterephthalic acid, and phenylenediacetic acid. Among them, tartaric acid, succinic acid, citric acid, and glutaric acid are preferable as the compound represented by Formula (I), aconitic acid and fumaric acid are preferable as the compound represented by Formula (II), and isophthalic acid and terephthalic acid are preferable as the compound represented by Formula (III). In a case where the polycarboxylic acid compound is a compound having optical isomerism, the compound may be a racemate or may be any optical isomer. The above-described polycarboxylic acid compounds may be used singly or in combination of two or more thereof.

The number of carboxy groups in the polycarboxylic acid compound may be 2 or more, preferably 2 to 5, and more preferably 2 to 4. The number of hydroxy groups in the polycarboxylic acid compound is, for example, 0 to 10, preferably 0 to 6, and more preferably 0 to 4. When the carboxy group and the hydroxy group are within the above range, the dispersibility and dispersion stability of the pigment are particularly excellent.

The content of the polycarboxylic acid compound is, for example, 0.01 to 20 parts by mass, preferably 0.1 to 15 parts by mass, and more preferably 0.2 to 10 parts by mass, per 100 parts by mass of the organic pigment. Further, the content of the polycarboxylic acid compound is, for example, 0.01 to 20% by mass, preferably 0.1 to 15% by mass, and more preferably 0.2 to 10% by mass, with respect to 100% by mass of the pigment composition. When the content of the polycarboxylic acid compound is within the above ranges, the dispersibility and dispersion stability of the pigment are particularly excellent.

The pigment composition of the present invention may contain a component other than the organic pigment (dye) and the polycarboxylic acid compound (hereinafter, sometimes referred to as "other component") as long as the effects of the present invention are not impaired. Examples of the other component include a pigment derivative, an inorganic pigment, a dispersant (surfactant), and rosin.

Examples of the pigment derivative include a sulfonic acid pigment derivative, an amino group-containing pigment derivative, and a phthalimidomethyl group-containing pigment derivative. Examples of the inorganic pigment include calcium carbonate, magnesium carbonate, sedimentary barium sulfate, kaolin, clay, alumina white, and white carbon. Examples of the dispersant (surfactant) include an anionic compound, a cationic compound, a nonionic compound, and a polymer compound.

When the other components are contained, the content thereof is, for example, 0.1 to 10% by weight, preferably 0.2 to 5% by weight, and more preferably 0.3 to 3% by weight with respect to 100% by weight of the pigment composition.

### [Method for Producing Pigment Composition]

The pigment composition of the present invention is obtained, for example, through addition of a polycarboxylic acid compound to an organic pigment. The addition method is not particularly limited, and a powdery polycarboxylic acid compound may be added to an organic pigment (dry blending), a powdery polycarboxylic acid compound may be added to a slurry-like organic pigment dispersed in a solvent in advance (wet method), or a polycarboxylic acid compound once dissolved in a solvent such as water may be added to an organic pigment as described above. In addition, the polycarboxylic acid compound may be added to the organic pigment at a time, or may be added in several portions. The pigment composition is obtained by adding the polycarboxylic acid compound to the organic pigment and then sufficiently stirring the mixture to disperse the polycarboxylic acid compound in the organic pigment. After sufficient mixing in the liquid, the polycarboxylic acid may be acidprecipitated by making the pH of the slurry acidic, or the polycarboxylic acid may be salted out in the form of a Ca salt, a Mg salt, an Al salt, or the like by adding an inorganic salt. As the organic pigment, the above-mentioned benzimidazolone azo pigment and quinacridone pigment which are commercially available can be used as they are. As the polycarboxylic acid compound, those which are commercially available as a reagent can be used as they are.

The amount of the polycarboxylic acid compound added is, for example, 0.01 to 20 parts by mass, preferably 0.1 to 15 parts by mass, and more preferably 0.2 to 10 parts by mass, per 100 parts by mass of the organic pigment.

The pigment composition obtained as described above may be further subjected to a general pigmentation treatment such as particle size adjustment, pH adjustment, filtration, alcohol washing, water washing, drying, or pulverization, if necessary. The particle size may be adjusted by heating, stirring, and aging the pigment in water and/or an organic solvent under normal pressure or increased pressure, or by a known method such as an acid paste method, an acid slurry method, a dry milling method, a solvent method, or a solvent milling method. In addition, the surface of the pigment particles may be treated with a pigment derivative such as a sulfonic acid pigment derivative, an amino group-containing pigment derivative, or a phthalimide methyl group-containing pigment derivative, a polymer such as a dispersant, a surfactant, rosin, or the like.

### [Colorant and Liquid Ink]

The colorant of the present invention is not particularly limited as long as it contains the above pigment composition, and can be suitably used for any colorant application that requires a coloring function. For example, it can be used in various known and commonly used applications such as a coating material, a printing ink, a colored molded article, a toner, a color filter or a black matrix of a display device, and an ink for inkjet recording. The colorant of the present invention contains a component suitable for each application in addition to the pigment composition of the present invention.

The liquid ink of the present invention is one aspect of a printing ink, but is not particularly limited as long as it contains the pigment composition of the present invention, and can be used for gravure printing or flexographic printing. That is, the liquid ink of the present invention can be used as, for example, a gravure ink or a flexographic ink. The liquid ink is roughly classified into an organic solvent-based liquid ink containing an organic solvent as a main solvent and an aqueous liquid ink containing water as a main solvent, and the liquid ink of the present invention can be applied to both the organic solvent-based liquid ink and the aqueous liquid ink. The liquid ink of the present invention contains a component suitable for each ink in addition to the pigment composition of the present invention as described below.

The liquid ink of the present invention contains, for example, a binder resin, a solvent, and a dispersant in addition to the pigment composition of the present invention. When the main component of the solvent is an organic solvent, the liquid ink is an organic solvent-based liquid ink, and when the main component of the solvent is a water-miscible organic solvent or an aqueous solvent such as water, the liquid ink is an aqueous liquid ink.

The liquid ink is obtained by dispersing a mixture obtained by adding a pigment and a binder resin with a disperser to obtain a pigment dispersion, adding a resin, a solvent, and if necessary, an additive such as a leveling agent to the obtained pigment dispersion, and stirring and mixing the mixture. The ink viscosity of the liquid ink is preferably in a range of 10 mPa·s or more from the viewpoint of preventing sedimentation of the pigments and appropriately dispersing the pigments, and 1000 mPa·s or less from the viewpoint of working efficiency during ink production and printing.

The binder resin is not particularly limited, and examples thereof include a polyurethane resin, an acrylic resin, a vinyl chloride-vinyl acetate copolymer resin, a vinyl chloride-acrylic copolymer resin, a chlorinated polyolefin resin, a modified polyolefin resin, cellulose, a cellulose derivative, a polyamide resin, an ethylene-vinyl acetate copolymer resin, a vinyl acetate resin, a styrene resin, a dammar resin, a styrene-maleic acid copolymer resin, a polyester resin, an alkyd resin, a polyvinyl chloride resin, a rosin resin, a rosin-modified maleic acid resin, a terpene resin, a phenol-modified terpene resin, a ketone resin, a cyclized rubber, a chlorinated rubber, butyral, a polyacetal resin, a petroleum resin, and modified resins thereof, which are used in general liquid inks. Among them, it is preferable that the liquid ink of the present invention contains a polyurethane resin as the binder resin.

Examples of the organic solvent include aromatic hydrocarbon organic solvents such as toluene, xylene, SOLVESSO #100, and SOLVESSO #150; aliphatic hydrocarbon organic solvents such as hexane, methylcyclohexane, heptane, octane, and decane; and ester organic solvents such as methyl acetate, ethyl acetate, isopropyl acetate, n-propyl acetate, butyl acetate, amyl acetate, ethyl formate, and butyl propionate. Examples of the water-miscible organic solvent include alcohols such as methanol, ethanol, propanol, butanol, and isopropyl alcohol; ketones such as acetone, methyl ethyl ketone, and cyclohexanone; and glycol ethers such as ethylene glycol (mono, di)methyl ether, ethylene glycol (mono, di)ethyl ether, ethylene glycol monopropyl ether, ethylene glycol monoisopropyl ether, monobutyl ether, diethylene glycol (mono, di)methyl ether, diethylene glycol (mono, di)ethyl ether, diethylene glycol monoisopropyl ether, diethylene glycol monobutyl ether, triethylene glycol (mono, di)methyl ether, propylene glycol (mono, di)methyl ether, propylene glycol monopropyl ether, propylene glycol monobutyl ether, and dipropylene glycol (mono, di)methyl ether.

In the liquid ink of the present invention, the pigment composition of the present invention is used, but in addition, an organic pigment (dye), an inorganic pigment, or a natural colorant used in general inks may be used in combination as a colorant within a range not affecting the effects of the present invention.

Examples of the organic pigment include phthalocyanine pigments, halogenated phthalocyanine pigments, anthraquinone pigments, anthanthrone pigments, dianthraquinonyl pigments, anthrapyrimidine pigments, perylene pigments, perinone pigments, thioindigo pigments, dioxazine pigments, isoindolinone pigments, quinophthalone pigments, insoluble azo pigments, condensed azo pigments, azomethine pigments, flavanthrone pigments, diketopyrrolopyrrole pigments, isoindoline pigments, indanthrone pigments, and carbon black pigments. Examples of the inorganic pigment include white pigments such as titanium oxide, zinc oxide, zinc sulfide, barium sulfate, calcium carbonate, chromium oxide, silica, lithopone, antimony white, and gypsum.

Examples of inorganic pigments other than the white pigment include aluminum particles, mica, bronze powder, chrome vermillion, chrome yellow, cadmium yellow, cadmium red, ultramarine blue, iron blue, red iron oxide, yellow iron oxide, iron black, and zircon.

The liquid ink of the present invention may further contain various additives such as a wax, a chelate-based crosslinking agent, an extender pigment, a leveling agent, a defoaming agent, a plasticizer, an infrared absorber, an ultraviolet absorber, a fragrance, and a flame retardant, as necessary.

### EXAMPLES

Hereinafter, the present invention will be described in more detail with reference to Examples and Comparative Examples. In the following Examples and Comparative Examples, "parts" and "%" represent "parts by mass" and "% by mass", respectively, unless otherwise specified.

### (Examples 1 to 19, 22 to 27 and Comparative Examples 1 to 22)

As shown in Table 1 below, the organic pigment and the acid compound were put into a mill cup (large size) of a mixing pulverizer LAB MILL (manufactured by Osaka Chemical Co., Ltd.) and mixed for 30 seconds to obtain a pigment composition.

### (Example 20)

130 g of water wetcake (manufactured by DIC Corporation) of C. I. Pigment Yellow 180 (pigment component: 50 g) was added to a 2 L stainless steel cup filled with 1000 g of water, and the mixture was stirred for 1 hour. Then, 2.5 g of L(+)-tartaric acid (manufactured by Kanto Chemical Co., Inc.) was added thereto, and the mixture was stirred for 1 hour. This was filtered with a Buchner funnel, and the wetcake was dried at 98°C for 18 hours and pulverized for 30 seconds with a mixing pulverizer LAB MILL (manufactured by Osaka Chemical Co., Ltd.) to obtain PY180 Composition 20.

### (Example 21)

L(+)-tartaric acid (manufactured by Kanto Chemical Co., Ltd.) in Example 20 was replaced with citric acid (manufactured by Kanto Chemical Co., Ltd.), and the same operation was performed to obtain PY180 composition 21.

The notations in Tables 1 and 2 are as follows.

### (Organic Pigments)

PY180: C.I. Pigment Yellow 180 (manufactured by DIC Corporation)
PR122/V19: C.I. Pigment Red 122/Violet 19 solid solution (manufactured by DIC Corporation)
PR122: C.I. Pigment Red 122 (manufactured by DIC Corporation)
PV19: C.I. Pigment Violet 19 (manufactured by DIC Corporation)
PY83: C.I. Pigment Yellow 83 (manufactured by DIC Corporation)
PR146: C.I. Pigment Red 146 (manufactured by DIC Corporation)
PR213: C.I. Pigment Red 213 (manufactured by DIC Corporation)
PB15:3: C.I. Pigment Blue 15:3 (manufactured by DIC Corporation)
PV23: C.I. Pigment Violet 23 (manufactured by DIC Corporation)
PR254: C.I. Pigment Red 254 (manufactured by DIC Corporation)

### (Acid Compounds)

Tartaric acid: L(+)-Tartaric acid (manufactured by Kanto Chemical Co., Inc.)
Succinic acid: Succinic acid (manufactured by Kanto Chemical Co., Inc.)
Citric acid: Citric acid (manufactured by Kanto Chemical Co., Inc.)
Adipic acid: Adipic acid (manufactured by Kanto Chemical Co., Inc.)
Oxalic anhydride: Oxalic anhydride (manufactured by Kanto Chemical Co., Inc.)
Oxalic acid dihydrate: Oxalic acid dihydrate (manufactured by Kanto Chemical Co., Inc.)
Fumaric acid: Fumaric acid (manufactured by Kanto Chemical Co., Inc.)
Glutaric acid: Glutaric acid (manufactured by Kanto Chemical Co., Inc.)
Isophthalic acid: Isophthalic acid (manufactured by Kanto Chemical Co., Inc.)
Terephthalic acid: Terephthalic acid (manufactured by Kanto Chemical Co., Inc.)
Aconitic acid: trans-Aconitic acid (manufactured by FUJIFILM Wako Pure Chemical Corporation)
Benzoic acid: Benzoic acid (manufactured by Kanto Chemical Co., Inc.)
Phthalic acid: Phthalic acid (manufactured by Kanto Chemical Co., Inc.)
Disodium phthalate: Phthalic acid disodium salt (manufactured by Kanto Chemical Co., Inc.)
Sodium benzenesulfonate: Benzenesulfonic acid sodium salt (manufactured by Kanto Chemical Co., Inc.)
Glycine: Glycine (manufactured by Kanto Chemical Co., Inc.)
Aspartic acid: Aspartic acid (manufactured by Kanto Chemical Co., Inc.)
Hydroxystearic acid: Hydroxystearic acid (manufactured by Kanto Chemical Co., Inc.) Maleic acid: Maleic acid (manufactured by Kanto Chemical Co., Inc.)
Mellitic acid: Mellitic acid (manufactured by Tokyo Chemical Industry Co., Ltd.)

**[Table 1]**

| | Organic pigment | | Acid compound | | Obtained pigment composition name |
|---|---|---|---|---|---|
| | Type | Amount | Type | Amount | |
| Example 1 | PY180 | 50 g | Tartaric acid | 0.15 g | PY180 Composition 1 |
| Example 2 | PY180 | 50 g | Tartaric acid | 0.25 g | PY180 Composition 2 |
| Example 3 | PY180 | 50 g | Tartaric acid | 0.5 g | PY180 Composition 3 |
| Example 4 | PY180 | 50 g | Tartaric acid | 1 g | PY180 Composition 4 |
| Example 5 | PY180 | 50 g | Tartaric acid | 1.5 g | PY180 Composition 5 |
| Example 6 | PY180 | 50 g | Tartaric acid | 2 g | PY180 Composition 6 |
| Example 7 | PY180 | 50 g | Tartaric acid | 2.5 g | PY180 Composition 7 |
| Example 8 | PY180 | 50 g | Succinic acid | 1 g | PY180 Composition 8 |
| Example 9 | PY180 | 50 g | Citric acid | 0.15 g | PY180 Composition 9 |
| Example 10 | PY180 | 50 g | Citric acid | 0.25 g | PY180 Composition 10 |
| Example 11 | PY180 | 50 g | Citric acid | 2.5 g | PY180 Composition 11 |
| Example 12 | PY180 | 50 g | Adipic acid | 1 g | PY180 Composition 12 |
| Example 13 | PY180 | 50 g | Oxalic anhydride | 1 g | PY180 Composition 13 |
| Example 14 | PY180 | 50 g | Oxalic acid dihydrate | 1 g | PY180 Composition 14 |
| Example 15 | PY180 | 50 g | Fumaric acid | 1 g | PY180 Composition 15 |
| Example 16 | PY180 | 50 g | Glutaric acid | 1 g | PY180 Composition 16 |
| Example 17 | PY180 | 50 g | Isophthalic acid | 1 g | PY180 Composition 17 |
| Example 18 | PY180 | 50 g | Terephthalic acid | 1 g | PY180 Composition 18 |
| Example 19 | PY180 | 50 g | Aconitic acid | 1 g | PY180 Composition 19 |
| Example 22 | PR122/PV19 | 50 g | Tartaric acid | 0.25 g | PR122/PV19 Composition 1 |
| Example 23 | PR122/PV19 | 50 g | Citric acid | 0.25 g | PR122/PV19 Composition 2 |
| Example 24 | PR122 | 50 g | Tartaric acid | 0.25 g | PR122 Composition 1 |
| Example 25 | PR122 | 50 g | Citric acid | 0.25 g | PR122 Composition 2 |
| Example 26 | PV19 | 50 g | Tartaric acid | 0.25 g | PR19 Composition 1 |
| Example 27 | PV19 | 50 g | Citric acid | 0.25 g | PR19 Composition2 |
| Comparative Example 1 | PY180 | 50 g | Benzoic acid | 1 g | Comparative PY180 composition 1 |
| Comparative Example 2 | PY180 | 50 g | Phthalic acid | 1 g | Comparative PY180 composition 2 |
| Comparative Example 3 | PY180 | 50 g | Disodium phthalate | 1 g | Comparative PY180 composition 3 |
| Comparative Example 4 | PY180 | 50 g | Sodium benzenesulfonate | 1 g | Comparative PY180 composition 4 |
| Comparative Example 5 | PY180 | 50 g | Glycine | 1 g | Comparative PY180 composition 5 |
| Comparative Example 6 | PY180 | 50 g | Aspartic acid | 1 g | Comparative PY180 composition 6 |
| Comparative Example 7 | PY180 | 50 g | Hydroxystearic acid | 1 g | Comparative PY180 composition 7 |
| Comparative Example 8 | PY180 | 50 g | Maleic acid | 1 g | Comparative PY180 composition 8 |
| Comparative Example 9 | PY180 | 50 g | Mellitic acid | 1 g | Comparative PY180 composition 9 |
| Comparative Example 10 | PY83 | 50 g | Tartaric acid | 1 g | Comparative PY83 composition 1 |
| Comparative Example 11 | PY83 | 50 g | Succinic acid | 1 g | Comparative PY83 composition 2 |
| Comparative Example 12 | PY83 | 50 g | Citric acid | 1 g | Comparative PY83 composition 3 |
| Comparative Example 13 | PR146 | 50 g | Tartaric acid | 1 g | Comparative PR146 composition 1 |
| Comparative Example 14 | PR146 | 50 g | Citric acid | 1 g | Comparative PR146 composition 2 |
| Comparative Example 15 | PR213 | 50 g | Tartaric acid | 1 g | Comparative PR213 composition 1 |
| Comparative Example 16 | PR213 | 50 g | Citric acid | 1 g | Comparative PR213 composition 2 |
| Comparative Example 17 | PB15:3 | 50 g | Tartaric acid | 0.25 g | Comparative PB15:3 composition 1 |
| Comparative Example 18 | PB15:3 | 50 g | Citric acid | 0.25 g | Comparative PB15:3 composition 2 |
| Comparative Example 19 | PV23 | 50 g | Tartaric acid | 0.25 g | Comparative PV23 composition 1 |
| Comparative Example 20 | PV23 | 50 g | Citric acid | 0.25 g | Comparative PV23 composition 2 |
| Comparative Example 21 | PR254 | 50 g | Tartaric acid | 0.25 g | Comparative PR254 composition 1 |
| Comparative Example 22 | PR254 | 50 g | Citric acid | 0.25 g | Comparative PR254 composition 2 |

### [Preparation of Polyurethane Ink]

For each of the pigment compositions obtained in Examples 1 to 27 and Comparative Examples 1 to 22, 10 g of the pigment composition, 20 g of a polyurethane resin SANPRENE IB-501 (manufactured by Sanyo Chemical Industries, Ltd.), 13 g of ethyl acetate, 7 g of isopropyl alcohol, and 180 g of 1/8-inch steel beads (manufactured by Mochiki steel ball & bearing Co., Ltd.) were placed in a 250 mL wide-mouthed polyethylene bottle and dispersed for 30 minutes with a paint shaker (manufactured by Toyo Seiki Seisaku-sho, Ltd.). Thereafter, 35 g of a polyurethane resin SANPRENE IB-501, 9.75 g of ethyl acetate, and 5.25 g of isopropyl alcohol were added to the wide-mouthed bottle, and the mixture was dispersed for 5 minutes with a paint shaker (manufactured by Toyo Seiki Seisaku-sho, Ltd.) to obtain a polyurethane ink.

In addition, polyurethane inks were respectively obtained by the same operation from the organic pigments (organic pigments containing no acid compound) used as raw materials when preparing the respective pigment compositions.

### (Measurement of Initial Viscosity of Polyurethane Ink)

The obtained polyurethane ink was allowed to stand in a constant temperature bath at 20° C for 1 hour or longer, and the viscosity thereof was measured at a rotation speed of 60 rpm using an R85-type viscometer RB85L (manufactured by Toki Sangyo Co., Ltd.).

### (Measurement of Viscosity Over Time of Polyurethane Ink)

The obtained polyurethane ink was stored in a multiple-safety drier MSO-45TPH (manufactured by FUTABA Kagaku Co., Ltd.) at 50°C for 7 days, and then allowed to stand in a constant temperature bath at 20°C for 1 hour or longer, and the viscosity at a rotation speed of 60 rpm was measured with an R85-type viscometer RB85L (manufactured by Toki Sangyo Co., Ltd.).

### (Determination of Dispersibility)

The effect of improving dispersibility by the acid compound was calculated by the following formula. As the calculated value is smaller, the dispersibility is more excellent. [Initial viscosity of polyurethane ink of pigment composition of Example or Comparative Example]/[Initial viscosity of polyurethane ink of organic pigment used as raw material]

In addition, a case where the value of the above formula was 25% or less was determined as A, a case of 25% to 50% was determined as B, a case of 50% to 100% was determined as C, and a case of 100% or more was determined as D. The values are A, B, C, and D in order from the best dispersibility.

### (Determination of Dispersion Stability)

The effect of improving dispersion stability by the acid compound was calculated by the following formula. As the calculated value is smaller, the dispersion stability is more excellent. [Viscosity over time of polyurethane ink of pigment composition of Example or Comparative Example]/[Viscosity over time of polyurethane ink of organic pigment used as raw material]

In addition, a case where the value of the above formula was 25% or less was determined as A, a case of 25% to 50% was determined as B, a case of 50% to 100% was determined as C, and a case of 100% or more was determined as D. The values are A, B, C, and D in order from the best dispersion stability.

The evaluation results of the dispersibility and dispersion stability in the polyurethane ink are shown in Table 2.

**[Table 2]**

| | Pigment composition name | Acid compound | Acid compound | Polyurethane ink evaluation | | | |
|---|---|---|---|---|---|---|---|
| | | | Addition amount | Dispersibility | | Dispersion stability | |
| Example 1 | PY180 Composition 1 | Tartaric acid | 0.30% | 17% | A | 31% | B |
| Example 2 | PY180 Composition 2 | Tartaric acid | 0.50% | 14% | A | 24% | A |
| Example 3 | PY180 Composition 3 | Tartaric acid | 1% | 15% | A | 29% | B |
| Example 4 | PY180 Composition 4 | Tartaric acid | 2% | 15% | A | 27% | B |
| Example 5 | PY180 Composition 5 | Tartaric acid | 3% | 11% | A | 21% | A |
| Example 6 | PY180 Composition 6 | Tartaric acid | 4% | 15% | A | 22% | A |
| Example 7 | PY180 Composition 7 | Tartaric acid | 5% | 9% | A | 18% | A |
| Example 8 | PY180 Composition 8 | Succinic acid | 2% | 47% | B | 48% | B |
| Example 9 | PY180 Composition 9 | Citric acid | 0.30% | 22% | A | 33% | B |
| Example 10 | PY180 Composition 10 | Citric acid | 0.50% | 16% | A | 27% | B |
| Example 11 | PY180 Composition 11 | Citric acid | 5% | 32% | B | 47% | B |
| Example 12 | PY180 Composition 12 | Adipic acid | 2% | 41% | B | 53% | C |
| Example 13 | PY180 Composition 13 | Oxalic anhydride | 2% | 44% | B | 90% | C |
| Example 14 | PY180 Composition 14 | Oxalic acid dihydrate | 2% | 44% | B | 54% | C |
| Example 15 | PY180 Composition 15 | Fumaric acid | 2% | 31% | B | 46% | B |
| Example 16 | PY180 Composition 16 | Glutaric acid | 2% | 35% | B | 45% | B |
| Example 17 | PY180 Composition 17 | Isophthalic acid | 2% | 22% | A | 35% | B |
| Example 18 | PY180 Composition 18 | Terephthalic acid | 2% | 35% | B | 46% | B |
| Example 19 | PY180 Composition 19 | Aconitic acid | 2% | 29% | B | 45% | B |
| Example 20 | PY180 Composition 20 | Tartaric acid | 5% | 9% | A | 43% | B |
| Example 21 | PY180 Composition 21 | Citric acid | 5% | 10% | A | 44% | B |
| Example 22 | PR122/PV19 Composition 1 | Tartaric acid | 0.50% | 34% | B | 46% | B |
| Example 23 | PR122/PV19 Composition 2 | Citric acid | 0.50% | 16% | A | 39% | B |
| Example 24 | PR122 Composition 1 | Tartaric acid | 0.50% | 26% | B | 40% | B |
| Example 25 | PR122 Composition 2 | Citric acid | 0.50% | 32% | B | 46% | B |
| Example 26 | PR19 Composition 1 | Tartaric acid | 0.50% | 5% | A | 18% | A |
| Example 27 | PR19 Composition2 | Citric acid | 0.50% | 6% | A | 47% | B |
| Comparative Example 1 | Comparative PY180 composition 1 | Benzoic acid | 2% | 52% | C | 58% | C |
| Comparative Example 2 | Comparative PY180 composition 2 | Phthalic acid | 2% | 64% | C | 52% | C |
| Comparative Example 3 | Comparative PY180 composition 3 | Disodium phthalate | 2% | 72% | C | 67% | C |
| Comparative Example 4 | Comparative PY180 composition 4 | Sodium benzenesulfonate | 2% | 83% | C | 58% | C |
| Comparative Example 5 | Comparative PY180 composition 5 | Glycine | 2% | 84% | C | 69% | C |
| Comparative Example 6 | Comparative PY180 composition 6 | Aspartic acid | 2% | 81% | C | 82% | C |
| Comparative Example 7 | Comparative PY180 composition 7 | Hydroxystearic acid | 2% | 79% | C | 67% | C |
| Comparative Example 8 | Comparative PY180 composition 8 | Maleic acid | 2% | 58% | C | 101% | D |
| Comparative Example 9 | Comparative PY180 composition 9 | Mellitic acid | 2% | 58% | C | 59% | C |
| Comparative Example 10 | Comparative PY83 composition 1 | Tartaric acid | 2% | 69% | C | 69% | C |
| Comparative Example 11 | Comparative PY83 composition 2 | Succinic acid | 2% | 95% | C | 77% | C |
| Comparative Example 12 | Comparative PY83 composition 3 | Citric acid | 2% | 109% | D | 100% | D |
| Comparative Example 13 | Comparative PR146 composition 1 | Tartaric acid | 2% | 84% | C | 96% | C |
| Comparative Example 14 | Comparative PR146 composition 2 | Citric acid | 2% | 86% | C | 94% | C |
| Comparative Example 15 | Comparative PR213 composition 1 | Tartaric acid | 2% | 105% | D | 100% | D |
| Comparative Example 16 | Comparative PR213 composition 2 | Citric acid | 2% | 99% | C | 104% | D |
| Comparative Example 17 | Comparative PB15:3 composition 1 | Tartaric acid | 0.50% | 96% | C | 79% | C |
| Comparative Example 18 | Comparative PB15:3 composition 2 | Citric acid | 0.50% | 100% | D | 106% | D |
| Comparative Example 19 | Comparative PV23 composition 1 | Tartaric acid | 0.50% | 100% | D | 92% | C |
| Comparative Example 20 | Comparative PV23 composition 2 | Citric acid | 0.50% | 102% | D | 96% | C |
| Comparative Example 21 | Comparative PR254 composition 1 | Tartaric acid | 0.50% | 130% | D | 105% | D |
| Comparative Example 22 | Comparative PR254 composition 2 | Citric acid | 0.50% | 135% | D | 111% | D |

As shown in Table 2, it was found that in the pigment compositions of the present invention of Examples 1 to 27 using an organic pigment composed of a benzimidazolone azo pigment or a quinacridone pigment and at least one polycarboxylic acid compound represented by Formulae (I) to (III), both dispersibility and dispersion stability were improved as compared with the pigment compositions of Comparative Examples using only an organic pigment without using a polycarboxylic acid compound. On the other hand, in the case of Comparative Examples 1 to 9 in which an acid compound other than at least one polycarboxylic acid compound represented by Formulae (I) to (III) was used, or in the case of Comparative Examples 10 to 22 in which an organic pigment other than the benzimidazolone azo pigment or the quinacridone pigment was used, it was found that the improvement in dispersibility and dispersion stability as in Examples 1 to 27 was not observed. From the above, it can be said that the combination of an organic pigment composed of a benzimidazolone azo pigment or a quinacridone pigment and at least one polycarboxylic acid compound represented by Formulae (I) to (III) in the pigment composition of the present invention specifically exhibits the effects of dispersibility and dispersion stability.

## Claims

1. A pigment composition comprising at least one organic pigment selected from the group consisting of benzimidazolone azo pigments and quinacridone pigments, and at least one polycarboxylic acid compound represented by the following Formulae (I) to (III):
**HOOC-R₁-COOH** ... (I)
wherein R₁ represents an alkylene group which may be substituted with a hydroxy group or a carboxy group, or a single bond; 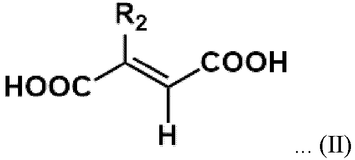 wherein R₂ represents an alkyl group which may be substituted with a hydroxy group or a carboxy group; 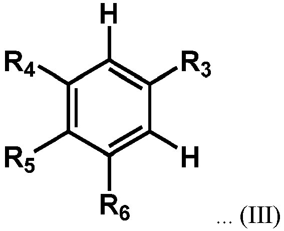 wherein R₃ represents a carboxy group or an alkyl group substituted with a carboxy group, and R₄ to R₆ each independently represent a hydrogen atom, a hydroxy group, a carboxy group, or an alkyl group which may be substituted with a hydroxy group or a carboxy group, and one or more of R₄ to R₆ are a carboxy group or an alkyl group substituted with a carboxy group.

2. A colorant comprising the pigment composition according to claim 1.

3. A liquid ink comprising the colorant according to claim 2.
